# EUROPEAN PATENT SPECIFICATION

(11) **EP 2 780 382 B1**
(45) Date of publication and mention of the grant of the patent: **03.02.2016**
(21) Application number: 12795029.3
(22) Date of filing: 16.11.2012
(51) Int. Cl.: C08F 220/18, C08F 220/04

(54) **POLYMERIC THICKENERS**
POLYMERE VERDICKUNGSMITTEL
ÉPAISSISSANTS POLYMÈRES

(30) Priority: 18.11.2011 GB 201120022
(43) Date of publication of application: 24.09.2014
(73) Proprietor: Scott Bader Company Limited, Wellingborough Northamptonshire NN29 7RL (GB)
(72) Inventor: STANION, Mark Thomas, Rushden Northamptonshire NN10 9NS (GB); HUNT, Paul Edward, Northamptonshire NN7 2GD (GB)
(74) Representative: Webster, Jeremy Mark
(86) International application number: PCT/GB2012/052845
(87) International publication number: WO 2013/072696

(56) References cited:
- EP-A1- 1 386 959
- WO-A1-2007/090759

## Description

### INTRODUCTION

The invention relates to acrylic/methacrylic emulsion copolymers useful for the thickening of a variety of aqueous systems. In particular the invention provides thickeners effective under acidic conditions.

Various forms of acrylic/methacrylic copolymers have been used as thickeners for many decades. An early form of the technology is disclosed in US Patent No. 2,798,053, in which a poly[acrylic acid] is prepared by copolymerising acrylic acid with a small amount of diallyl sucrose. Whilst the copolymers of US'053 may be prepared via polymerisation in water, they are too watersoluble to give an aqueous solution/dispersion that is easy to handle, and the preferred method of preparation involves dispersion polymerisation in an inert organic solvent such as heptane or benzene, followed by isolation of the copolymer as a solid powder prior to use. Even when the copolymers are prepared in water, isolation as a powder is still deemed necessary. The main problem with using such copolymers in powder form is the difficulty in dispersing the powder into the aqueous medium to be thickened. Often the grains of powder clump together when added to water, and the resulting lumps are difficult to disperse evenly, even with the aid of high levels of mechanical shearing, such as with a high shear dispersion mixer.

Acrylic/methacrylic copolymer thickeners handleable as aqueous dispersions are taught by British Patent No. 870,994. These are prepared as emulsion copolymers of 25% to 70% by weight of methacrylic acid with lower alkyl acrylate or methacrylate esters, and are used to thicken aqueous systems at pH = 7·0 or above.

GB870,994 also discusses, at page 1 lines 28 to 43, the preparation of polyacrylate/polymethacrylate-type thickeners by the alkaline hydrolysis of esters, amides or nitriles of acrylic acid. This hydrolysis process was clearly part of the common general knowledge in November 1956 (the priority date of the patent), and products of this nature have been commercially available from Scott Bader Company Limited for many years, under the trade name Texigel®. The Texigel® products are primarily hydrolysed copolymers of >80%wt (based on polymer) of methyl acrylate with a small amount of acrylic or methacrylic acid, methyl acrylate being preferred for ease of hydrolysis at ambient temperatures. Although, however, GB870,994 discusses this hydrolysis process, none of its example thickeners are subjected to that process; typically these examples are used after neutralisation with only an equivalent amount of NaOH, at pHs generally in the range 7·6 to 8·6.

Another class of acrylic/methacrylic copolymer thickeners is the so-called HASE thickeners, an acronym for Hydrophobically modified, Alkali Swellable (or Soluble) Emulsions. Such thickeners are described in, for example, European Patent Application EP-A-0,013,836, which discloses copolymer dispersions obtainable by aqueous emulsion copolymerisation of the following monomer types.
(i) 20% to 69·5% by weight, based on the total weight of monomers, of methacrylic acid or acrylic acid
(ii) 0·5% to 25% by weight, based on the total weight of monomers, of acrylic or methacrylic ester monomers of general formula

   H₂C=CR-C(O)-O-(CH₂-CH₂O) n-R°

   in which R = H or methyl, n is at least 2 and R° is a hydrophobic group, such as an alkyl, alkylaryl or polycyclic alkyl group, having 8 to 30 carbon atoms.
(iii) At least 30% by weight, based on the total weight of monomers, of a (C₁ to C₄) alkyl acrylate or alkyl methacrylate, preferably ethyl acrylate, butyl acrylate or methyl methacrylate, most preferably ethyl acrylate.
(iv) Optionally, up to 1·0% by weight of a polyethylenically unsaturated monomer.

Like the thickeners of GB870,994, the examples of EP-A-0,013,836 are used in non-hydrolysed form, being neutralised with one equivalent of sodium hydroxide. This would suggest an end-use pH in the range 7·0 to 9·0. Ethyl acrylate is employed in the majority of the example formulations.

US Patent No. 4,138,381 also discloses acrylic/methacrylic copolymer latex thickeners, although these are prepared as dispersions in glycols (especially propylene glycol) or aqueous glycols, rather than in purely aqueous carriers. The polymers themselves are prepared from the following monomers.
(i) About 10% to 98% by weight (most preferably 30 to 88%) of polymer of at least one unsaturated carboxylic acid of 3 to 6 carbon atoms.
(ii) About 1% to 50% by weight (most preferably 2 to 30%) of polymer of at least one alkyl acrylate or alkyl methacrylate wherein the alkyl group has from 1 to 30 carbon atoms.
(iii) About 1% to 85% by weight (most preferably 10 to 40%)of polymer of at least one ester of general formula

   H₂C=CR-C(O)-O-(CH₂-CH(R²)O)x(CH₂)y-R¹

   in which R and R² are hydrogen or methyl, x is a positive integer of 5 to 80 y is 0 or a positive integer of 1 to 20, and R¹ is a (C₁ to C₂₀) alkyl group or an alkylphenyl group whose alkyl group has from 1 to 20 carbon atoms.

These thickeners are also used without being hydrolysed first. They are used to thicken paints whose pH, where it is stated, is generally given as 9·5. The preferred acid component (i) is methacrylic and the preferred alkyl acrylate or methacrylate ester, - component (ii) - is clearly stearyl methacrylate.

One document which does disclose polyacrylate/polymethacrylate species effective as thickeners at acidic pHs is US Patent No. 4,384, 096. This discloses aqueous emulsion copolymers of the following monomers.
(i) About 15% to 60% weight, based on total monomers, of at least one C₃ to C₈ α,β-ethylenically unsaturated carboxylic acid monomer (for example, acrylic or methacrylic acid).
(ii) About 15% to 80% weight, based on total monomers, of at least one non-ionic, copolymerisable C₂ to C₁₂ α,β-ethylenically unsaturated monomer, including C₁ to C₈ alkyl acrylates or methacrylates.
(iii) About 1% to 30% weight, based on total monomers, of at least one so-called non-ionic vinyl surfactant ester of general formula

   H₂C=CR-C(O)-O-(CH₂-CH(R')O)m(CH₂-CH₂O) n-R"

   in which R is H or methyl, R' is methyl or ethyl, R" is C₈ to C₂₀ alkyl or C₈ to C₁₆ alkylphenyl, n is an average number from about 6 to about 100 and m is an average number from 0 to about 50.

This patent claims effective thickening down to pH = 5·5, although the thickeners described therein are normally used in ammonium salt form (i.e. neutralised with ammonia solution), and for the examples for which a pH is stated, this figure is of the order of 9·0. The patent discusses possible presolubilisation of the thickeners with aqueous alkali, but hydrolysis before use is not taught. The vast majority of the example copolymers are derived from methacrylic acid and as component (i) and ethyl acrylate as component (ii).

European Patent EP-B-0,705,854 discloses polyacrylate/polymethacrylate emulsion copolymer thickeners prepared from the following monomers.
(i) About 15% to 60% weight, based on total monomers, of at least one C₃ to C₈ α,β-ethylenically unsaturated carboxylic acid monomer (for example, acrylic or methacrylic acid).
(ii) About 15% to 80% weight, based on total monomers, of at least one non-ionic, copolymerisable C₂ to C₁₂ α,β-ethylenically unsaturated monomer, including C₁ to C₈ alkyl acrylates or methacrylates.
(iii) About 1% to 30% weight, based on total monomers, of at least one so-called ethylenically unsaturated biphilic monomer.

The biphilic monomer of this particular invention is an acrylate or methacrylate ester of a polyethoxylated hydrophobic alcohol, namely a tristyrylphenol. (The methacrylate ester of the 25-mole ethoxylate of behenyl (C22) alcohol is shown as a comparative example). The example copolymers are derived from methacrylic and or methacrylic anhydride as component (i) and ethyl acrylate as component (ii). The thickeners are used after neutralisation with sodium hydroxide, but are not hydrolysed. Thickening is demonstrated at pHs from "about 7" up to 9-36. At these alkaline pHs, superior thickening is obtained with the copolymers incorporating the tristyrlphenol-derived monomer.

There remains, therefore, a need within the art for waterborne thickeners for aqueous media that are effective at acidic pH, for example at pH 6 or below and especially at pH below 5·5.

### SUMMARY OF INVENTION

Surprisingly, the applicants have found that an aqueous polyacrylate/polymethacrylate composition, effective in thickening aqueous media at acidic pH, especially at pH below 5·5, may be obtained by the alkaline hydrolysis of an emulsion copolymer latex comprising an acrylic/methacrylic copolymer obtained via the emulsion copolymerisation of monomer components: methyl acrylate, an ethylenically unsaturated acid component which preferably includes at least some acrylic acid and a (meth)acrylate surfactant ester component which preferably includes an alkoxypoly(alkyleneoxy)ethyl(meth)acrylate.

More specifically, the applicants have found that an aqueous polyacrylate/polymethacrylate composition, effective in thickening aqueous media at acidic pH, especially at pH below 5·5, may be obtained by the alkaline hydrolysis of an emulsion copolymer latex comprising an acrylic/methacrylic copolymer obtained via the emulsion copolymerisation of the following monomer components:
A. from 75% weight to 97·5% by weight, based on the total weight of monomer components A + B + C + D, of methyl acrylate;
B. from 0·1% to 15% by weight, based on the total weight of monomer components A + B + C + D, of at least one ethylenically unsaturated carboxylic acid monomer containing one C=C double bond capable of free radical copolymerisation with component A and at least one carboxylic acid (CO₂H) group;
C. from 1% to 20% by weight based on the total weight of monomer components A + B + C + D of at least one associative monomer, being a (meth)acrylate ester of an alkoxylated alcohol, suitably of general formula (I) R-O-(CH₂-CH₂-O)x(CH₂-CH(R¹)O)y-C(O)-CR²=CH₂ (I) in which R is a linear or branched (C₇ to C₃₂) alkyl group or an alkylphenyl group whose alkyl group has from 1 to 20 carbon atoms, R¹ is methyl, R² is hydrogen or methyl, x is a positive integer with an average value from 3 to 80 and y is 0 or a positive integer with an average value from 1 to 20; and
D. from 0% to 15% by weight of one or more non-ionic ethylenically unsaturated monomers other than those defined above as A, B or C;
wherein the total monomer components A + B + C (and D if present) together should add up to 100%.

Thus, in the first aspect, the invention provides an acrylic/methacrylic copolymer obtainable by emulsion copolymerisation of components A to C, and optionally D, as defined herein.

In a second aspect the invention provides a latex comprising an emulsion copolymer in accordance with the first aspect in an aqueous phase.

In a third aspect the invention provides a method of making a thickener composition which comprises a step of hydrolysing an emulsion copolymer of the first aspect or a latex of the second aspect of the invention.

In a fourth aspect the invention provides a composition suitable for use as a pH responsive thickener, which composition comprises a hydrolysis product of an emulsion copolymer in accordance with the first aspect or a latex in accordance with the second aspect.

In a fifth aspect the invention provides the use of a thickener composition, obtainable via hydrolysis of an emulsion copolymer in accordance with the first aspect or latex in accordance with the second aspect, as a thickener for an aqueous system.

The present inventors have surprisingly found that an emulsion copolymer derived from a significant amount of methyl acrylate in combination with an ethylenically unsaturated carboxylic acid monomer and a selected type of associative monomer is a suitable precursor for a thickener effective at both alkaline and acidic pH. In particular, a hydrolysis product of this emulsion copolymer is surprisingly effective for thickening at low pH.

This technical effect is surprising and is not disclosed in the prior art discussed above. Typically, thickeners derived from ethyl acrylate and an acid monomer (generally selected as methacrylic acid) are effective at alkaline pH but provide little or no thickening effect at acidic pH.

The present inventors have found that the inclusion of methyl acrylate in the monomer mixture provides an emulsion copolymer which is suitable for hydrolysis to subsequently increase the acid content of the copolymer. The increased acid content results in a thickening effect which is retained at low pH.

If desired the copolymer of the first aspect of the invention may be isolated as a solid by spray drying or evaporation or by other processes known in the art.

The second aspect of the invention concerns a latex comprising a copolymer in accordance with the first aspect in an aqueous phase. The latex may contain additional optional components selected from surfactants, defoamers, biocide preservatives and antioxidants, for example.

According to the first and other aspects of the invention the emulsion copolymer is generally derived from 75% to 97.5% by weight, based on the total weight of monomer components A to D, of methyl acrylate. Preferably the methyl acrylate component A is present in an amount of at least 77.5% by weight, especially 80% by weight or more, more preferably at least 84% by weight of the monomer components A to D. Furthermore, preferably A is present in an amount up to 95% by weight, more preferably up to 92% by weight.

Preferably the ethylenically unsaturated carboxylic acid component B is provided in an amount of from 0.1% by weight, more preferably 0.5% by weight, especially at least 1.5% by weight and most preferably at least 2% by weight of the monomer components A to D. The upper limit for component B is generally 15% by weight, preferably 12% by weight, more preferably 10% by weight and especially 9.5% by weight.

The associative monomer component C is provided in an amount of at least 1%, more preferably 1.5% and especially at least 2%. An upper limit for the amount of component C is generally 20% by weight, more preferably 15% by weight and especially up to 11% by weight.

One or more components D, if present, may provide up to 15% by weight of the monomer components, preferably no more than 10% by weight and most preferably no more than 5% by weight.

Various ethylenically unsaturated carboxylic acid monomers are suitable for use as component B, as discussed in more detail below. Preferred examples include C₃ to C₈ acid monomers including acrylic acid, methacrylic acid, carboxyethyl acrylate, itaconic acids and mixtures thereof. Preferably component B comprises at least 40% by weight, preferably at least 45% and more preferably at least 50% by weight of acrylic acid together with one or more C₃ to C₈ ethylenically unsaturated acid monomers.

Example associative monomers C of formula (I) employed in embodiments of the invention are described in more detail below.

According to preferred embodiments of the invention the associative monomer C of formula (I) contains a substituent R which is a C₈ to C₃₀ alkyl group, especially a C₁₀ to C₂₅ alkyl group, more preferably a C₁₂ to C₂₃ alkyl group and most preferably a C₁₂ to C₂₂ alkyl group. In further prepared embodiments component C comprises an associative monomer of formula (I) having a value X in the range of from 20 to 25.

Most preferably the associative monomer of component C contains a substituent R² which is methyl.

Particularly preferred embodiments of an emulsion copolymer in accordance with the first aspect (in terms of components A to D) are discussed in more detail below. These preferred embodiments apply equally to the second to fifth aspects of the invention.

The second aspect of the invention provides a latex comprising the present emulsion copolymer in an aqueous phase. Preferably the latex comprises up to 50% and typically up to 45% by weight of a copolymer in accordance with the first aspect. The latex may comprise additional optional components such as a surfactant, for example. Preferably the latex comprises an anionic or non-ionic surfactant.

Suitably the copolymer is present in the latex as particles having an average particle size in the range of 50 to 500 nm, especially 50 to 300 nm, more preferably 80 to 200 nm, as measured by a photon correlation spectroscopy method as described later.

Conveniently a latex in accordance with the second aspect exhibits a viscosity in a range of 7 to 30 centipoise, especially 10 to 30 centipoise when measured using a Brookfield RVT instrument at 25°C using spindle 4, speed 100rpm.

A third aspect of the invention provides a method for making a thickener composition which comprises a step of hydrolysing an emulsion copolymer of the first aspect or a latex according to the second aspect.

Typically the method may include a preliminary step of diluting a latex of the second aspect with water in order to provide a content of up to 10% by weight of copolymer, preferably up to 7 % by weight and more preferably up to 5% by weight, prior to a hydrolysis step.

Preferably the hydrolysis step comprises the addition of a water soluble alkali typically selected from potassium hydroxide, sodium hydroxide and ammonium hydroxide. Conveniently alkali is added in an amount sufficient to provide a pH of at least 10 and preferably at least 12. Preferably sodium hydroxide is employed.

Hydrolysis of the copolymer is indicated by gel formation and an increase in the viscosity of the composition. Preferably the hydrolysis product exhibits a viscosity of at least 10,000 centipoise (when measured using a Brookfield RVT instrument at 25°C using spindle 6, speed 5 rpm) at a solids content of no more than 10%, and preferably no more than 7%, and at a pH of at least 9.5, preferably at least 10.

Typically the composition is allowed to stand at ambient temperature for a period sufficient to allow adequate gel formation. Conveniently a time period of less than 12 hours, preferably less than 5 hours, more preferably less than 3 hours and especially less than 2 hours is appropriate.

Preferably the method includes a subsequent step of reducing the pH of the hydrolysis product with acid in order to reduce the pH to 6 or less, and especially to 5·5 or less. Preferably the process employs a weak acid, especially a weak organic acid such as citric acid, acetic acid, oxalic acid ascorbic acid, tartaric acid, malic acid and lactic acid, for example. pH reduction with citric acid as a weak acid is preferred.

A fourth aspect of the invention provides a composition suitable for use as a pH responsive thickener which comprises a hydrolysis product of an emulsion copolymer in accordance with the first aspect or a latex in accordance with the second aspect. Typically the composition ready for use as a thickener exhibits a viscosity of at least 5,000 centipoise when measured at pH 6 using a Brookfield RVT instrument (spindle 6, speed 5 rpm). Preferred embodiments of the composition may exhibit a viscosity of at least 10,000, preferably at least 20,000 centipoise, when measured at pH 6.

The fifth aspect of the invention provides the use of a thickener composition obtainable via hydrolysis of the copolymer or the latex as defined above as a thickener for an aqueous system. Preferably this aspect of the invention concerns the use of a thickener composition obtainable by (i) hydrolysing of the copolymer of the first aspect or the latex of the second aspect and (ii) adjusting the pH of the hydrolysis product to 6 or less.

Especially in cases where the pH of the thickener composition is 6 or less, it may be stirred into the aqueous composition to be thickened. Alternatively components of the proposed aqueous composition may be stirred into the thickener composition. Particularly preferred embodiments of the various aspects of the present invention are described below, by way of example. Embodiments described in relation to the first aspect of the invention i.e. the emulsion copolymer apply equally to the other aspects of the invention.

### Detailed Description of the Invention

In considering the invention in detail, it should be understood that the term (meth)acrylate refers to acrylate and/or methacrylate, an abbreviation commonly used by those skilled in the art. Therefore, the expression "methyl acrylate" refers to a compound of formula H₂C=CH-C(O)-O-CH₃, and the term "methyl methacrylate" refers to a compound of formula H₂C=C(CH₃)-C(O)-O-CH₃, whereas the term "methyl (meth)acrylate" refers to either a compound of formula H₂C=CH-C(O)-O-CH₃ or a compound of formula H₂C=C(CH₃)-C(O)-O-CH₃ or, indeed, a mixture of the two. The terms "(meth)acrylic" and "poly(meth)acrylate" may also be understood in the same light.

An emulsion copolymer latex according to the invention preferably comprises a poly(meth)acrylate copolymer obtained by free radical emulsion copolymerisation of the following three monomer components.
A. from 75% weight to 97·5% by weight, based on the total weight of monomer components A + B + C + D, of methyl acrylate;
B. from 0·1% to 15% by weight, based on the total weight of monomer components A + B + C + D, of at least one ethylenically unsaturated carboxylic acid monomer containing one C=C double bond capable of free radical copolymerisation with component A and at least one carboxylic acid (CO₂H) group;
C. from 1% to 20% by weight based on the total weight of monomer components A + B + C + D of at least one associative monomer being a (meth)acrylate ester of an alkoxylated alcohol, suitably of general formula (I)

   R-O-(CH₂-CH₂-O)x(CH₂-CH(R¹)O)y-C(O)-CR²=CH₂ (I)

   in which R is a linear or branched (C₇ to C₃₂) alkyl group or an alkylphenyl group whose alkyl group has from 1 to 20 carbon atoms, R¹ is methyl, R² is hydrogen or methyl, x is a positive integer with an average value from 3 to 80 and y is 0 or a positive integer with an average value from 1 to 20; and
D. from 0% to 15% by weight of one or more non-ionic ethylenically unsaturated monomers other than those defined above as A, B or C;
wherein the total monomer components A + B + C + D together should add up to 100%.

Preferred example monomer components are as follows:
Component B - Ethylenically unsaturated carboxylic acid monomer

The ethylenically unsaturated carboxylic acid monomer (component B) may be any ethylenically unsaturated carboxylic acid monomer containing one C=C double bond capable of free radical copolymerisation with component A and at least one carboxylic acid (CO₂H) group. Possible non-limiting examples of ethylenically unsaturated carboxylic acid monomers are acrylic acid, methacrylic acid, β-carboxyethyl acrylate (sometimes referred to as acrylic acid dimer), itaconic acid, maleic acid or fumaric acid. The monoalkyl esters of dicarboxylic acids such as itaconic, maleic or fumaric acids may also be used. Mixtures of ethylenically unsaturated carboxylic monomers may also be used.

Preferred examples of ethylenically unsaturated carboxylic acid monomers (component B) are acrylic acid, methacrylic acid, β-carboxyethyl acrylate, itaconic acid and mixtures thereof.

Especially referred examples of ethylenically unsaturated carboxylic acid monomers (component B) are acrylic acid, methacrylic acid, and mixtures thereof.

Where a mixture of two or more ethylenically unsaturated carboxylic acid monomers is used, it is preferred that at least 40% by weight, preferably 45%, more preferably 50% by weight of this mixture (i.e. 50% by weight of the total weight of monomer component B) comprises acrylic acid. Most preferred is for ethylenically unsaturated monomer component B to comprise from 50% to 100% by weight of acrylic acid and from 0% to 50% by weight of methacrylic acid.

### Component C - Associative Monomer

The associative monomer component C generally makes up from 1% by weight to 20% by weight of the total of monomer components A + B + C + D (if D is present) and is typically a compound of general formula (I)

R-O-(CH₂-CH₂-O)x(CH₂-CH(R¹)O)y-C(O)-CR²=CH₂ (I)

in which R is a linear or branched (C₇ to C₃₂) alkyl group or an alkylphenyl group whose alkyl group has from 1 to 20 carbon atoms, R¹ is methyl, R² is hydrogen or methyl, x is a positive integer with an average value from 3 to 80 and y is 0 or a positive integer with an average value from 1 to 20.

The above general formula (I)of monomer component C may be viewed as consisting of three distinct segments C(i), C(ii) and C(iii), bonded together into the associative monomer C(i)-C(ii)-C(iii), wherein:
C(i) is the residue from a linear or branched (C₇ to C₃₂) alkyl group or an alkylphenyl group whose alkyl group has from 1 to 20 carbon atoms,
C(ii) is a poly[alkylene oxide] polyether chain i.e. a poly[ethylene oxide] polyether chain or a poly[ethylene oxide-co-propylene oxide] polyether chain, and
C(iii) is an acrylate ester or methacrylate ester group.

Preferably R in formula (I) is a C₈ to C₃₂ alkyl group. Such associative monomer components C may therefore, in principle, be prepared by reacting a monofunctional alcohol R⁴-OH, in which R⁴ is a linear or branched (C₈ to C₃₂) alkyl group or an alkylphenyl group whose alkyl group has from 1 to 20 carbon atoms, with either ethylene oxide, or ethylene oxide followed by propylene oxide(to give a block copolymer) or propylene oxide followed by ethylene oxide (to give a block copolymer), or a mixture of ethylene oxide and propylene oxide (to give a random copolymer), and the subsequent conversion of the resultant alkoxylated alcohol into its acrylate or methacrylate ester. It follows that the poly[alkylene oxide] entity of formula (I):

- (CH₂-CH₂-O)x(CH₂-CH(R¹)O)y-

is intended to cover the block copolymer arrangements and the random copolymer arrangement. As discussed below, the values of x and y in component C represent the average values (i.e. number of ethylene oxide units and number of propylene oxide units) across the bulk product.

Thus, in embodiments, associative monomer component C is a compound as follows:
C(i) - C(ii) - C(iii)
wherein C(ii) is a poly[alkylene oxide] polyether chain.

As noted above, the alkylene oxide can comprise ethylene oxide units (i.e. poly[ethylene oxide]) or a combination of propylene oxide units and ethylene oxide units (i.e. poly[ethylene oxide-co-propylene oxide].

Suitable alcohols R⁴-OH may be any linear or branched monofunctional alcohol whose alkyl group R⁴ has from 8 to 32 carbon atoms, or any alkylphenol whose alkyl group may be linear or branched and has from 1 to 20 carbon atoms. Preferred alcohols R⁴-OH are the linear or branched monofunctional alcohols with an alkyl group R⁴ having from 8 to 32 carbon atoms, non-limiting examples of which are 2-ethyl-1-hexanol, 1-nonanol, 2-nonanol, 3,7-dimethyl-1-octanol, 3,7-dimethyl-3-octanol, 1,decanol, 2-decanol, isodecanol, 1-undecanol, 2-butyl-1-octanol, 1-dodecanol, lauryl alcohol, 2-dodecanol, 1-tridecanol, 1-tetradecanol, myristyl alcohol, 2-tetradecanol, pentadecanol, 1-hexadecanol, cetyl alcohol, palmityl alcohol, 2-hexadecanol, 1-heptadecanol, margaryl alcohol, 1-octadecanol, stearyl alcohol, 1-nonadecanol, 2-octyl-1-decanol, eicosanol, arachidyl alcohol, heneicosanol, 1-docosanol, behenyl alcohol, tricosanol, 2-decyl-1-tetradecanol, tetracosanol, lignoceryl alcohol, pentacosanol, hexacosanol, heptacosanol, octacosanol, nonacosanol, triacontanol, melissyl alcohol, hentriacontanol, dotriacontanol and mixtures of any of the above.

More preferred alcohols R⁴-OH are the linear or branched monofunctional alcohols with an alkyl group R⁴ having from 10 to 25 carbon atoms, including 3,7-dimethyl-3-octanol, 1,decanol, 2-decanol, isodecanol, 1-undecanol, 2-butyl-1-octanol, 1-dodecanol, lauryl alcohol, 2-dodecanol, 1-tridecanol, 1-tetradecanol, myristyl alcohol, 2-tetradecanol, pentadecanol, 1-hexadecanol, cetyl alcohol, palmityl alcohol, 2-hexadecanol, 1-heptadecanol, margaryl alcohol, 1-octadecanol, stearyl alcohol, 1-nonadecanol, 2-octyl-1-decanol, eicosanol, arachidyl alcohol, heneicosanol, 1-docosanol, behenyl alcohol, tricosanol, 2-decyl-1-tetradecanol, tetracosanol, lignoceryl alcohol, pentacosanol, and mixtures of any of the above.

Particularly preferred alcohols R⁴-OH are the linear or branched monofunctional alcohols with an alkyl group R⁴ having from 12 to 22 carbon atoms, including 1-dodecanol, lauryl alcohol, 2-dodecanol, 1-tridecanol, 1-tetradecanol, myristyl alcohol, 2-tetradecanol, pentadecanol, 1-hexadecanol, cetyl alcohol, palmityl alcohol, 2-hexadecanol, 1-heptadecanol, margaryl alcohol, 1-octadecanol, stearyl alcohol, 1-nonadecanol, 2-octyl-1-decanol, eicosanol, arachidyl alcohol, heneicosanol, 1-docosanol, behenyl alcohol, and mixtures of any of the above.

Especially preferred are lauryl alcohol and behenyl alcohol. Most especially preferred is behenyl alcohol.

Examples of alcohols R⁴-OH, in which R⁴ is an alkylphenyl group whose alkyl group has from 1 to 20 carbon atoms, are octylphenol, nonylphenol and dodecylphenol. The use within the invention of associative monomers (component C) derived from alcohols R⁴-OH in which R⁴ is an alkylphenyl group is, however, not preferred.

The poly[alkylene oxide] polyether chain that makes up the middle segment C(ii) of the associative monomer component C has the general formula (II)

-(CH₂-CH₂-O)x(CH₂-CH(R¹)O)y- (II)

in which R¹ is methyl, x is a positive integer with an average value from 3 to 80 and y is 0 or a positive integer with an average value from 1 to 20.

When propylene glycol is present in the poly[alkylene oxide] polyether chain, it is preferred to use only small amounts of it, i.e. average values of y ranging from 1 to 5. However, the avoidance of propylene glycol is most preferred, i.e. y = 0 in the above general formula.

The average value of x may range from 3 to 80, preferably from 10 to 60, more preferably from 20 to 30, most preferably from 20 to 25.

As will be readily understood by those skilled in the art, the ethoxylation/propoxylation of alcohols typically produces a mixture of products differing in the lengths of their alkylene oxide chains. Hence the reaction of, say, 1 mole of 2-ethyl-1-hexanol with 10 moles of ethylene oxide will not produce a uniform product in which each molecule of 2-ethyl-1-hexanol is bonded to a polyether chain consisting of exactly 10 molecules of ethylene oxide, but will actually produce a mixture of products in which any given molecule of 2-ethyl-1-hexanol is bonded to a polyether chain that could be any length from perhaps 2 or 3 ethylene oxide units up to perhaps 15 or more ethylene oxide units. Within any individual molecule of product, the number of ethylene oxide units will be an integer, but the value of that integer will vary from one molecule of product to the next. The average chain length across the bulk product, however, will be 10 ethylene oxide units. The same principle applies if the alcohol is reacted with propylene oxide as well as with ethylene oxide, so the reaction of 1 mole of 2-ethyl-1-hexanol with, say, 5 moles of propylene oxide and 10 moles of ethylene oxide will produce a mixture of products in which any individual molecule could contain anywhere between 1 or 2 and 6 or more propylene oxide units, and anywhere between 2 or 3 and 15 or more ethylene oxide units. The average chain length across the bulk product, however, will be 5 propylene oxide and 10 ethylene oxide units. The discussion of the values of x and y in the associative monomer component C used in the invention, having the general formula (I):

R-O-(CH₂-CH₂-O)x(CH₂-CH(R¹)O)y-C(O)-CR²=CH₂

should be viewed in this light.

It has already been observed above that associative monomers useful in the invention may be obtained via the conversion of alkoxylated, preferably ethoxylated, alcohols, into their acrylate or methacrylate esters. As is well known to those skilled in the art, numerous alkoxylated, especially ethoxylated, alcohols are commercially available, their primary use being as non-ionic surfactants. Such surfactants are available from a variety of suppliers, examples being the Brij™ and Synperonic™ ranges offered by Croda Europe of Goole, UK, the Serdox™ range offered by Elementis Specialties of Delden, The Netherlands, the Tergitol™ range offered by Dow Chemical Company, the Empilan™ range offered by Huntsman Performance Products and the Rhodasurf™ range offered by Rhodia Novecare. Illustrative examples of these surfactants include Serdox™ NSL 30 (described as a 30-mole ethoxylate of stearyl alcohol) and Synperonic 13/9, understood to be a 9-mole ethoxylate of tridecyl alcohol. Many surfactant products are obtained by ethoxylation/propoxylation of mixtures of alcohols of different carbon chain lengths. Illustrative examples of these materials are Tergitol™ 15-S-30, which is understood to be a 31-mole ethoxylate of a mixture of C₁₁-C₁₅ secondary alcohols and Serdox™ NBS 6.6/90, which is understood to be a mixture of C₉-C₁₁ alcohols ethoxylated with, on average, 6·6 moles of ethylene oxide per mole of alcohol. In principle, the conversion of any of these alkoxylated alcohol surfactants to their (meth)acrylate esters would give associative monomers useful as monomer component C in the preparation of emulsion copolymer latexes of the instant invention.

The (meth)acrylate ester segment C(iii) may be attached to the alkoxylated alcohol by any chemical process known to those skilled in the art. Non-limiting examples of such processes include esterification with (meth)acrylic acid, or reaction with the appropriate (meth)acrylic anhydride or (meth)acryloyl chloride.

Preferred examples of associative monomer component C are those monomers of general formula R-O-(CH₂-CH₂-O)x-C(O)-CR²=CH₂ in which R is a linear or branched (C₁₀ to C₂₅) alkyl group, the average value of x lies in the range from 10 to 60, R² is H or methyl and especially methyl

More preferred examples of associative monomer component C are those monomers of general formula R-O-(CH₂-CH₂-O)x-C(O)-CR²=CH₂ in which R is a linear or branched (C₁₂ to C₂₂) alkyl group, the average value of x lies in the range from 20 to 30, R² is H or methyl and especially methyl.

Even more preferred examples of associative monomer component C are those monomers of general formula R-O-(CH₂-CH₂-O)x-C(O)-CR²=CH₂ in which R is a linear or branched (C₁₂ to C₂₂) alkyl group, the average value of x lies in the range from 20 to 25, R² is H or methyl and especially methyl

Especially preferred examples of associative monomer component C are the active ingredient in the commercial product offered by Bimax Chemicals of London, UK, under the name LEM-23 (described as the methacrylate ester of lauryl alcohol (C₁₂) 23-mole ethoxylate) and the active ingredients in the commercial products offered by Rhodia Novecare as:
Sipomer® BEM (described as the methacrylate ester of the 25-mole ethoxylate of behenyl (C₂₂) alcohol);
Sipomer® HPM-100, believed to be a 22-mole ethoxylate of a C₁₁ alcohol; and
Sipomer® HPM-400, believed to be a 20-mole ethoxylate of a C₁₃ alcohol.

The active ingredient of Sipomer® BEM and the active ingredient of Sipomer® HPM-400 are most especially preferred.

### Component D - Optional additional non-ionic ethylenically unsaturated monomer

The optional non-ionic, ethylenically unsaturated monomer (component D) may comprise one or more additional non-ionic ethylenically unsaturated monomers copolymerisable with both the methyl acrylate of component A and the other copolymerisable monomer components B and C.

Furthermore, methyl acrylate makes up at least 75% by weight, conveniently at least 77.5% by weight, and preferably at least 80% by weight of the total of monomers A to D. Thus, when the total weight percentage of monomer components B and C together add up to 20% of the total monomers making up the copolymer, the whole of the remaining 80% of the total monomer composition making up the copolymer should preferably be methyl acrylate. If, however, the total weight percentage of monomer components B + C together add up to only 15% of the total monomers making up the copolymer, the remaining 85% of the total monomer composition making up the copolymer should preferably comprise from 80% to 85% of methyl acrylate and from 0% to 5% by weight of additional non-ionic ethylenically unsaturated monomer D.

The optional, additional non-ionic ethylenically unsaturated monomer making up component D is not particularly limited and may be any non-ionic ethylenically unsaturated monomer copolymerisable with methyl acrylate A and the other monomer components B and C. Possible additional non-ionic ethylenically unsaturated monomers are the linear, branched, cycloaliphatic or arylaliphatic esters of acrylic or methacrylic acids, such as methyl methacrylate, ethyl (meth)acrylate, the various isomers of butyl (meth)acrylate, the various isomers of hexyl (meth)acrylate, n-octyl (meth)acrylate, 2-ethylhexyl (meth)acrylate, 1-decyl (meth)acrylate, 2-decyl (meth)acrylate, isodecyl (meth)acrylate, the various isomers of dodecyl (meth)acrylate including lauryl (meth)acrylate, myristyl (meth)acrylate, cetyl (or palmityl) (meth)acrylate, stearyl (meth)acrylate, also cyclohexyl (meth)acrylate, isobornyl (meth)acrylate, benzyl (meth)acrylate, and the like.

Other optional, additional non-ionic ethylenically unsaturated monomers making up part of component A may be vinylaromatic monomers such as styrene, α-methylstyrene, vinyltoluene and the like, or amide or nitrile derivatives of (meth)acrylic acids such as acrylamide, acrylonitrile and the like.

It is also possible for a small proportion of monomer component D to comprise a small amount (up to 0·5% of the total amount of components A to D) of a polyethylenically unsaturated monomer such as methylene-bis-acrylamide, divinylbenzene, ethylene glycol di(meth)acrylate or other di(meth)acrylate ester(s) of di-or-polyfunctional alcohols such as 1,3-butanediol, 1,4-butanediol, 1,6-hexanediol, diethylene glycol, trimethylolpropane, pentaerythritol and the like. The use within the invention of a polyethylenically unsaturated monomer is, however, not preferred.

Where an optional, additional non-ionic ethylenically unsaturated monomer is used (monomer component D), preferred examples of such monomers are the C₁-C₈ alkyl esters of (meth)acrylic acid (such as methyl methacrylate, ethyl acrylate, butyl acrylate, 2-ethylhexyl acrylate and the like), styrene or acrylonitrile.

It is most preferred, however, to avoid the use of an additional non-ionic ethylenically unsaturated monomer D, although trace amounts may be included as impurities present in the commercial supplies of any monomer

In addition to the ethylenically unsaturated components A, B, C, and D, a chain transfer agent may also be included with the monomer components making up the copolymer of the invention. Thus, in some embodiments a chain transfer agent is used; and in other embodiments a chain transfer agent is not used. Common chain transfer agents are halocarbons or sulphur containing species, though some alcohols and some compounds containing an allylic C-H bond will also behave as chain transfer agents in emulsion polymerisation reactions. Examples of halocarbon chain transfer agents are carbon tetrachloride, bromoform and bromotrichloromethane. Possible sulphur containing chain transfer agents include thioesters and thiols, the latter often being known as mercaptans. Examples of suitable thioesters include butyl thioglycolate (butyl mercaptoacetate), isooctyl thioglycolate, isooctyl mercaptopropionate, dodecyl thioglycolate and pentaerythritol tetrakis(3-mercaptopropionate). Examples of suitable thiols (mercaptans) include n-dodecyl mercaptan, t-dodecyl mercaptan, octyl mercaptan, tetradecyl mercaptan and hexadecyl mercaptan. When a chain transfer agent is used, it is preferable to use a sulphur containing chain transfer agent, more preferable to use a thiol (mercaptan) and most preferable to use n-dodecyl mercaptan.

If a chain transfer agent is used at all, the amount employed should be between 0-002% and 0·250% by weight, based on the total weight of monomer components A + B + C + D. Preferably, the amount employed should be between 0·025% and 0·200% by weight, more preferably between 0·050% and 0·150% by weight, based on the total weight of monomer components A + B + C + D.

### Preparation of the emulsion copolymer latex

The emulsion copolymer latex may be prepared by a conventional aqueous emulsion copolymerisation process familiar to those skilled in the art. In such a process, the monomers are first emulsified into an aqueous pre-emulsion in which the continuous phase is the aqueous phase, emulsification being facilitated by the use of appropriate surfactants. These surfactants may be anionic or non-ionic in nature.

Examples of non-ionic surfactants are alkylene oxide adducts (i.e. ethoxylates and/or propoxylates) of long chain (C₈-C₃₀, linear or branched) alcohols or long chain (C₈-C₃₀, linear or branched) alkylphenols. Preferred non-ionic surfactants are the ethoxylates of secondary C10 to C16 alcohols.

Preferred anionic surfactants are the sodium or ammonium sulphate salts, either of ethoxylated long chain (C₈-C₃₀, linear or branched) alcohols, or of ethoxylated long chain (C₈-C₃₀, linear or branched) alkylphenols. Sodium or ammonium salts of ethoxylated alcohol sulphates are especially preferred.

In a typical emulsion copolymerisation process for preparing copolymer latexes of the invention, employing a thermal initiator it is preferable to first charge a part of the aqueous phase to the reactor and heat this to reaction temperature (70° to 90°C, preferably 75° to 85°C, most preferably 80° to 85°C) and then add part of a pre-prepared aqueous solution of a free radical initiator before commencing a drip-feed of the monomer emulsion described above. The polymerisation process is exothermic, so the feed rate of the monomer emulsion is carefully controlled in order to maintain reaction temperature while avoiding exceeding it. The remainder of the pre-prepared initiator solution may be fed concurrently with the monomer emulsion, throughout the whole of the monomer emulsion feed or only part of it. Preferred thermal initiators are alkali metal persulphate salts or ammonium persulphate, ammonium persulphate being most preferred.

The pH of the reaction mixture during polymerisation is likely to be in the range of 1 to 5, more typically 2 to 4.

As an alternative to the use of thermal initiators the polymerisation process may employ a pair of redox initiators which would generally be said to react together but as separate feeds. One is an oxidant initiator (such as a persulphate salt, tertiary butyl hydroperoxide, hydrogen peroxide or potassium bromate) and the other a reductant initiator (such as sodium metabilsulphite, sodium formaldehyde sulfoxylate, sodium hydrosulphite, tartaric acid, ascorbic acid or a ferrous salt such as ferrous sulphate).

In the case where a redox initiation system is used a lower polymerisation temperature may be employed (such as 60°C or down to 40°C). In this case the polymerisation pH is expected to be below 7

After apparent completion of the polymerisation reaction, a "chaser" initiator solution may be added to ensure polymerisation of any lingering unreacted monomer, reducing the free monomer content of the finished latex down to below 1000ppm. Redox couple initiators are preferred for this process, such as a combination of *tert*-butyl hydroperoxide and sodium formaldehyde sulfoxylate, or a combination of hydrogen peroxide and ascorbic acid.

The finished emulsion polymer latex is normally filtered before packaging or use, in order to remove any coagulum, often referred to as grit. This mainly consists of copolymer particles of diameters much larger than the dispersed copolymer particles making up the bulk of the latex, and its presence in the final product is most undesirable. If, for instance, the latex were to be used to thicken a printing paste, the presence of grit could lead to blocking of the inkjet nozzles used in the printing process. Filtration is usually performed through a screen of 60µ or 100µ mesh size. Although the grit may be removed by filtration, the presence of too much grit in the latex before filtration can block or partially block the filter, leading to an unacceptably slow filtration time. For this reason, it is preferred that the amount of grit present in the latex before filtration is less than 0-01% by weight of the total latex.

### Use as a thickener

An emulsion copolymer latex produced in accordance with the method described above may contain typically up to about 45% of a copolymer in accordance with the first aspect of the present invention. In order to provide a thickener composition the latex is typically diluted to provide a content of up to 10% copolymer, more preferably up to 8% copolymer and especially up to 5% of copolymer.

The copolymer in the diluted latex is then subjected to a hydrolysis process in order to hydrolyse methyl acrylate units in the polymer to acrylic acid units. Preferably the hydrolysis process comprises addition of an alkali such as sodium hydroxide in an amount sufficient to raise the pH to at least 10, especially at least 12. The composition is allowed to stand, usually at ambient temperature, to allow the hydrolysis to proceed.

In order to provide a composition ready for addition to acidic media the pH is subsequently adjusted to 6 or less, preferably to 5.5 or less, by addition of a weak acid, typically a weak organic acid such as citric acid.

The present invention thus provides a process for making a thickened aqueous composition which comprises:
(1) subjecting a copolymer according to the first aspect of the invention to hydrolysis in order to hydrolyse methyl acrylate units to acrylic acid units,
(2) adjusting the pH of the hydrolysis products to 6 or less, and
(3) blending the product of (2) with an aqueous composition in an amount sufficient to provide a thickening effect.

The following examples illustrate the present invention;

### Examples

### Materials and Methods

SURFACTANT A is a solution (approx. 25% active content) of a sodium fatty alcohol ether sulphate, CAS No. 68585-34-2. It is commercially available as Kemsurf ESD from Lankem Ltd., of Dukinfield, Cheshire, UK, or as Empicol ESC3/G2 from Univar of Bradford, West Yorkshire, UK.

ACTICIDE MBS is a proprietary biocide, commercially available from Thor Specialties UK, of Northwich, Cheshire, UK.

E-CHEM DF 1315 is a proprietary defoamer, commercially available from eChem Ltd. of Leeds, UK.

Sipomer® BEM is the methacrylate ester of the 25-mole ethoxylate of behenyl (C₂₂) alcohol. It is manufactured by Rhodia-Novecare as a solution of ∼51% active content that also includes ∼23% methacrylic acid, and may be obtained in the UK via Melrob Ltd., of Crawley, Sussex, UK.

Sipomer® SEM-25 is the methacrylate ester of the 25-mole ethoxylate of tristyrylphenol. It is manufactured by Rhodia-Novecare as a solution of ∼60% active content that also includes ∼20% methacrylic acid, and may be obtained in the UK via Melrob Ltd., of Crawley, Sussex, UK.

HPM-100 is the active ingredient in the commercial product Sipomer® HPM100 available from Rhodia-Novecare. The chemical nature of the associative monomer is not publicly available but it is thought to be a 22 mole ethoxylate of a C11 alcohol.

HPM400 is the active ingredient in the commercial product Sipomer® HPM400 available from Rhodia-Novecare. Again, the exact chemical nature of the associative monomer is not publicly available but it is believed to be a 20 mole ethoxylate of a C13 alcohol.

C1618-11MA is a solution of the methacrylate ester the 11-mole ethoxylate of a C16-C18 fatty alcohol. This solution contains approximately 50% of the active ingredient in a 1:1 mixture of methacrylic acid and water, i.e. similar to the composition of commercial Sipomer® BEM.

C1618-25MA is a solution of the methacrylate ester of the 25-mole ethoxylate of a C16-C18 fatty alcohol, also ∼50% active content in aqueous methacrylic acid.

C1618-50MA is a solution of the methacrylate ester of the 50-mole ethoxylate of a C16-C18 fatty alcohol, also ∼50% active content in aqueous methacrylic acid.

β-CEA is β-carboxyethyl acrylate, sometimes referred to as acrylic acid dimer.

AMPS is an abbreviation for 2-acrylamido-2-methyl-1-propanesulphonic acid. The acid was used in these examples, not its sodium salt.

Solids contents are measured by weighing a small sample of the latex into an aluminium foil dish of 2-3cm in diameter, placing this in an oven at 110°C for one hour, cooling and weighing the amount of solid remaining. The sample size of latex used for this test is typically 0·75-1·00g.

pH is measured at ambient temperature with a Hanna pH meter, model HI 9125.

Particle size is measured via a photon correlation spectroscopy method using a Zetasizer 1000 instrument, manufactured by Malvern Instruments Limited of Malvern, Worcestershire, UK.

Viscosities are measured by a Brookfield RVT instrument at 25°C using spindle 4 speed 100rpm and are measured in centipoise (mPa.s).

### Preparation of Emulsion Copolymer Latexes

### Latex Example 1

Firstly, 195·05g of deionised water was charged to a beaker. 30·0g of Surfactant A and 17·25g of acrylic acid were then added with gentle stirring, until the surfactant dissolved. In a separate beaker, 20·0g of Sipomer® BEM-25 was dissolved into 365·75g of methyl acrylate, and this solution gradually added to the surfactant solution with vigorous stirring. Stirring was continued for a further 15 minutes to form Monomer Emulsion 1. The actual emulsion polymerisation was carried out in a 2-litre glass reactor which could be heated or cooled by means of a water jacket. This reactor was fitted with a lid incorporating inlet ports for a gaseous nitrogen feed and feeds of liquid reactants, the shafts of both a stainless steel turbine-style stirrer and an electronic thermometer, and the mounting for a water-cooled condenser. Into this reactor was charged 314·00g of deionised water, which was heated, with stirring, up to 83-85°C while maintaining a sub-surface nitrogen purge for 15 minutes, which was then continued throughout the remainder of the process at a much reduced flow rate.

In another beaker, 0·15g of sodium bicarbonate and 0.20g of ammonium persulphate were dissolved in 30·00g of deionised water to make the initiator solution. Once the water in the reactor had reached temperature and had been nitrogen-purged at temperature for 15 minutes, 22·76g of the initiator solution (i.e. 75% of the total amount of initiator solution) was added to the reactor and a feed of Monomer Emulsion 1 commenced at a rate slow enough to control the temperature in the reactor at between 83° and 85°C. As the volume of liquid in the reactor increased, the rate of addition of monomer emulsion could also be increased, such that the addition was completed in approximately 3 hours without exceeding a reactor temperature of 85°C. After an addition time of 2 hours, a drip feed of the remaining initiator solution into the reactor was started, to run concurrently with the remaining hour of the monomer emulsion feed. On completion of the two feeds, the vessel from which the monomer emulsion had been fed was flushed into the reactor with 12·50g deionised water and the contents then stirred for a further 30 minutes at 83·85°C before cooling to 70°C and adding 2·00g of a solution of hydrogen peroxide (50% concentration) dissolved in 2·00g of deionised water. After a further 15 minutes' stirring, a solution of 1·00g of ascorbic acid B.P. in 4·00g deionised water was added and stirring continued for a further 30 minutes. The reactor contents were then cooled, with continued stirring, down to a temperature of 40°C and 1·50g Acticide MBS and 0·60g Surfactant A added. Finally, a solution of 0·50g DF 1315 in 1·50g deionised water was added, flushed into the reactor with a further 2·0g deionised water.

The product emulsion copolymer latex was Latex Example 1. After cooling to room temperature, it was filtered through a nylon filter bag of mesh size 60µ to remove any coagulum (grit). The theoretical composition of the polymer, calculated from the weights of monomers used, is 91·9% methyl acrylate, 4·3% acrylic acid, 1·2% methacrylic acid and 2·6% methacrylate ester of the 25-mole ethoxylate of behenyl alcohol.

The theoretical composition of this polymer, along with the liquid properties of the latex, are set out in Table 1.

### Latex Examples 2 to 6

Using the same procedure as for Latex Example 1, Latex Examples 2 to 6 were prepared. The theoretical compositions of the copolymers and the properties of the latexes are also set out in Table 1.

**Table 1**

| LATEX EXAMPLE | 1 | 2 | 3 | 4 | 5 | 6 |
|---|---|---|---|---|---|---|
| Methyl acrylate (%) | 91·9 | 88·1 | 84·1 | 88·6 | 86·1 | 80·0 |
| Acrylic acid (%) | 4·3 | 4·4 | 4·4 | 7·6 | 10·1 | 4·5 |
| Methacrylic acid (%) | 1·2 | 2·3 | 3·6 | 1·2 | 1·2 | 4·8 |
| BEM active agent* (%) | 2·6 | 5·2 | 7·9 | 2·6 | 2·6 | 10·7 |
| | | | | | | |

| PROPERTIES | | | | | | |
|---|---|---|---|---|---|---|
| Solids content (%) | 38·9 | 39·1 | 39·3 | 39·7 | None measurable. Latex gelled in reactor after 2hrs feed. | 39·6 |
| pH | 2·58 | 3·00 | 3·05 | 2·92 | | 2·82 |
| Particle size (nm) | 100 | 97 | 87 | 183 | | 157 |
| Grit before filtration (%) | <0·01 | <0·01 | <0·01 | 0·1 | | <0·01 |
| Viscosity | 24.0 | 20.0 | 24.0 | 12.0 | Reaction failed | 18.0 |

| | | | | | | |
|---|---|---|---|---|---|---|
| * = the percentages shown are those of the methacrylate ester of the ethoxylated alcohol, not the percentage of the commercial product as supplied. | | | | | | |

### Comparative Latex Examples C7 to C11

Comparative Latex Example C7 is Texicryl® 13-314, an emulsion copolymer of methyl acrylate with a small amount of acrylic acid, which is commercially available from Scott Bader Company Limited.

Comparative Latex Example C8 is Texicryl® 13-313, an emulsion copolymer of ethyl acrylate, methacrylic acid and Sipomer® BEM, which is commercially available from Scott Bader Company Limited. Its composition is in accord with the teaching of European Patent Application EP-A-0,013,836 and US Patent 4,384,096, cited above.

Using the same procedure as for Latex Example 1, Comparative Latex Examples C9 to C11 and were prepared.. Their theoretical compositions and properties are set out in Table 2, alongside those of Comparative Latex Examples C7 and C8. In the case of the two commercial latex products C7 and C8, the properties shown are those typical of the production of these materials.

Comparative Latex Example C9 has essentially the same composition as Latex Example 1, but with the methyl acrylate monomer replaced by methyl methacrylate.

Comparative Latex Example C10 has essentially the same composition as Comparative Latex Example C8, but with the ethyl acrylate monomer replaced by methyl acrylate monomer.

Comparative Latex Example C11 is of similar composition to Latex Example 1, but employs Sipomer® SEM-25 in place of Sipomer® BEM.

**Table 2**

| COMPARATIVE LATEX EXAMPLE | C7 | C8 | C9 | C10 | C11 |
|---|---|---|---|---|---|
| Methyl acrylate (%) | 95·7 | - | - | 56·9 | 91·7 |
| Methyl methacrylate (%) | - | - | 91·9 | - | - |
| Ethyl acrylate (%) | - | 56·9 | - | - | - |
| Acrylic acid (%) | 4·3 | - | 4-3 | - | 4-3 |
| Methacrylic acid (%) | - | 39·7 | 1·2 | 39·7 | 1·0 |
| Sipomer® BEM (% AI)* | - | 3·4 | 2·6 | 3·4 | - |
| Sipomer® SEM-25 (% AI)* | - | - | - | - | 3·0 |

| PROPERTIES | | | | | |
|---|---|---|---|---|---|
| Solids content (%) | 40·4 | 30·2 | 37·5 | None measurable. Latex gelled in reactor after completion of monomer feed. | 39·6 |
| pH | 4·2 | 2·6 | 2·76 | | 2·71 |
| Particle size (nm) | 172 | 123 | 103 | | 129 |
| Grit before filtration (%) | <0·01 | 0·01 | <0·01 | | <0·01 |
| Viscosity | Not measured | Not measured | 20.0 | Reaction failed | 14.00 |

| | | | | | |
|---|---|---|---|---|---|
| * = the percentages shown are those of the methacrylate ester of the ethoxylated alcohol, not the percentage of the commercial product as supplied. | | | | | |

The failure to prepare Comparative Latex Example C10 shows that when methyl acrylate is used to replace the preferred ethyl acrylate in the prior art compositions, such as those of European Patent Application EP-A-0,013,836, (cited above), a viable emulsion copolymer latex cannot be obtained. Without wishing to be bound by theory, the applicants believe that this is due to the more hydrophilic nature of methyl acrylate, such that, when this more hydrophilic monomer is used in compositions containing high levels of extremely hydrophilic monomers like acrylic acid or methacrylic acid, the overall water compatibility of the whole monomer phase becomes so great that the organic and aqueous phases of the emulsion polymerisation become too mutually soluble to obtain a viable emulsion copolymer latex.

Again, without wishing to be bound by theory, the applicants believe that a similar effect accounts for the failure to obtain a viable emulsion copolymer latex from Latex Example 5, which also gelled in the reactor. In this case, acrylic acid is understood to be even more hydrophilic than methacrylic acid, such that when the level of acrylic acid is increased to a level above about 10% of the total monomer content, in a formulation already containing a large amount (>80% of the total monomer composition) of the quite hydrophilic monomer methyl acrylate, the overall water compatibility of the whole monomer phase again becomes so great that the organic and aqueous phases of the emulsion polymerisation become too mutually soluble to obtain a viable emulsion copolymer latex.

### Hydrolysis of the Emulsion Copolymer Latexes

The emulsion copolymer Latex Examples 1, 2, 3, 4 and 6, plus the Comparative Latex Examples C7, C8, C9 and C11 were subjected to the following procedure in order to evaluate thickening at different pH values, especially pH below about 5·5.

Deionised water (119·3g) was weighed into a 1-litre plastic container and the emulsion copolymer latex to be tested (14·0g) was stirred into it. (In the case of Comparative Example Latex C8, 114·6g of deionised water and 18·7g of latex were used, to allow for the lower solids content of this particular latex.) Then 3·8g of a 32% aqueous solution of sodium hydroxide was stirred in and the effect of this addition was observed over a period of 80 minutes. In most cases, the mixture became clear and very viscous over a period of 10 to 70 minutes. However, the mixture using Comparative Example Latex C9 remained opaque and of low viscosity throughout, so this particular test was abandoned at this stage. The observations recorded for each test mixture are summarised in Table 3.

Each test mixture was then left to stand at ambient temperature overnight before stirring in a further addition of 362·9g of deionised water. After this dilution step, the pH of each test mixture was measured and found to be in the region of 10. The viscosity of each test mixture was measured using a Brookfield RVT instrument, spindle 6 speed 5rpm. The pH of each test mixture was then progressively reduced by stirring in citric acid, 0·2g at a time. After each addition, the pH and Brookfield viscosity (spindle 6 speed 5rpm) were again measured. The viscosity results as the pH is reduced are summarised in Tables 4 and 5. All viscosities are in centipoise (hundredths of a Poise, also known as milli-Pascal seconds). Where a viscosity of ∼0 is shown, this means that the viscometer showed no discernable reading. (The measurement conditions of spindle 6 speed 5rpm are suited to the measurement of relatively high viscosities. Use of a larger spindle - numbered 1 or 2 - and faster speed would doubtless give a reading for those samples now shown as ∼0, but such a reading would not be directly comparable to those obtained with spindle 6 at 5rpm, of interest to show the effect of the invention.)

**Table 3**

| LATEX EXAMPLE | TIME TO REACH A VISCOUS STATE (MINS) | APPEARANCE AFTER 80 MINUTES IN ALKALINE SOLUTION | POURABILITY AFTER 80 MINUTES IN ALKALINE SOLUTION |
|---|---|---|---|
| 1 | 70 | Viscous & clear | No |
| 2 | 20 | Viscous & clear | No |
| 3 | 14 | Viscous & clear | No |
| 4 | 12 | Viscous & clear | No |
| 6 | 14 | Viscous & clear | No |
| C7 | 80 | Viscous & clear | Just about |
| C8 | Almost instantaneous | Viscous & clear | No |
| C9 | never | Very mobile & opaque | Yes |
| C11 | 70 | Viscous & clear | Yes |

**Table 4**

| LATEX EXAMPLE 2 | | COMPARATIVE LATEX EXAMPLE C7 | | COMPARATIVE LATEX EXAMPLE C8 | | COMPARATIVE LATEX EXAMPLE C11 | |
|---|---|---|---|---|---|---|---|
| pH | VISCOSITY | pH | VISCOSITY | pH | VISCOSITY | pH | VISCOSITY |
| ∼10 | 250,000 | ∼10 | 2,400 | 11·5 | 112,000 | ∼10 | 1,600 |
| 7·6 | 176,200 | 7·84 | ∼0 | 7·35 | 108,000 | - | - |
| 6·3 | 124,800 | - | - | 6·45 | 45,000 | - | - |
| - | - | - | - | 6·15 | 10,000 | - | - |
| - | - | - | - | 6·10 | 1,400 | - | - |
| 5·9 | 93,000 | - | - | 5·90 | ∼0 | - | - |
| 5·6 | 84,000 | - | - | - | - | 5·5 | 1,200 |
| 5·30 | 58,200 | 5·41 | ∼0 | - | - | - | - |
| 5·00 | 15, 600 | - | - | - | - | - | - |
| 4·85 | 3,000 | - | - | | - | - | - |

The data in Tables 3 and 4 show the advantages of the inventive compositions over those according to the prior art. Inventive Latex Example 2, although slower to build viscosity than Comparative Latex Example C8, shows good thickening at both alkaline and acidic pH. Comparative Latex Example C8 displays classic HASE thickener behaviour, thickening rapidly to high viscosity under alkaline conditions, but with rapid loss of thickening action as the pH is reduced below 7. Without wishing to be bound by theory, the applicants believe that copolymers employing ethyl acrylate monomer (as does C8), as opposed to methyl acrylate monomer (employed in the inventive compositions) are more resistant to alkaline hydrolysis than the inventive compositions, such that the extent of alkaline hydrolysis of Comparative Latex Example C8 under the conditions employed herein is minimal. Consequently, it is thought that insufficient carboxylic acid groups are present within the copolymer structure of C8 to maintain thickening effect as the pH is reduced into the acidic region (below 7·0, especially below 6·0).

Again without wishing to be bound by theory, resistance to hydrolysis of methyl methacrylate (as distinct from methyl acrylate) is believed to account for the poor performance of Comparative Latex Example C9 - in this case, the minimal hydrolysis leaves insufficient carboxylic acid groups in the copolymer structure to impart any thickening character at all.

Comparative Latex Example C7 lacks any associative monomer within its formulation, so its thickening effect is much reduced. Comparative Latex Example C11 employs an associative monomer (SEM-25), but not one according to the invention. The prior art teaches that in HASE-type formulations (copolymers of ethyl acrylate with much higher levels of carboxylic acid monomer than is employed in the instant invention), SEM-25 gives superior thickening results to BEM. However, it is clear from the behaviour of Comparative latex Example C11 that in the methyl acrylate based compositions of the instant invention, which employ a hydrolysis process to activate the thickening effect, the associative monomer present in Sipomer® BEM gives far superior performance compared to that present in SEM-25.

The results presented in Table 5 show the effect of varying the relative proportions of the monomer components in compositions according to the invention. For convenience, the percentage amounts of monomers used to make the emulsion copolymers are included in the Table, MA standing for methyl acrylate, AA for acrylic acid, MAA for methacrylic acid and AsM for the associative monomer, which in these examples is the 25-mole ethoxylate methacrylate of behenyl alcohol (i.e. the active agent within the commercial product known as Sipomer® BEM, not the commercial material as supplied). VISC. stands for viscosity, and is once again a Brookfield RVT measurement (spindle 6 speed 5rpm) in centipoise.

**Table 5**

| LATEX EXAMPLE 1 | | LATEX EXAMPLE 2 | | LATEX EXAMPLE 3 | | LATEX EXAMPLE 6 | | LATEX EXAMPLE 4 | |
|---|---|---|---|---|---|---|---|---|---|
| MA (%) | 91·9 | MA (%) | 88·1 | MA (%) | 84·1 | MA (%) | 80·0 | MA (%) | 88·6 |
| AA (%) | 4·3 | AA (%) | 4·4 | AA (%) | 4·4 | AA (%) | 4·5 | AA (%) | 7·6 |
| MAA (%) | 1·2 | MAA (%) | 2·3 | MAA (%) | 3·6 | MAA (%) | 4·8 | MAA (%) | 1·2 |
| AsM (%) | 2·6 | AsM (%) | 5·2 | AsM (%) | 7·9 | AsM (%) | 10·7 | AsM (%) | 2·6 |
| | | | | | | | | | |

| pH | VISC. | pH | VISC. | pH | VISC. | pH | VISC. | pH | VISC. |
|---|---|---|---|---|---|---|---|---|---|
| 10 | 106,000 | 10 | 250,000 | 10·23 | 236,800 | 10·7 | 60,000 | 9·83 | 107,000 |
| 8 | 95,200 | 7·6 | 176,200 | 8·1 | 151,600 | 7·8 | 52,800 | 7·85 | 94,000 |
| - | - | 6·71 | 146,600 | 6·7 | 115,600 | 6·98 | 39,000 | 6·57 | 87,000 |
| 6·3 | 72,200 | 6·3 | 124,800 | 6·25 | 103,000 | 6·13 | 29,800 | 6·2 | 71,200 |
| - | - | 5·9 | 93,000 | 5·92 | 67,000 | 5·9 | 25,000 | 5·9 | 65,400 |
| 5·7 | 53,000 | 5·6 | 84,000 | 5·75 | 54,000 | 5·7 | 15,000 | 5·7 | 54,400 |
| 5·32 | 38,000 | 5·30 | 58,200 | 5·35 | 24,400 | 5·34 | 3,800 | 5·35 | 33,000 |
| 5·16 | 23,200 | 5·17 | 41,200 | 5·19 | 14,000 | - | - | 5·15 | 24,800 |
| 5·12 | 14,600 | 5·09 | 33,200 | 5·04 | 1,600 | - | - | - | - |
| 5·00 | 6,600 | 5·00 | 15,600 | - | - | - | - | 5·00 | 12,000 |
| - | - | 4·85 | 3,000 | - | - | - | - | 4·90 | 6,000 |

The results show that associative monomer levels between about 3% and about 10% (by weight, based on total monomers) promote more effective thickening at alkaline pHs, but that associative monomer levels between about 2·5% and 5·5% (again by weight, based on total monomers) are preferred to maintain a useful thickening effect at pH = 5·1 or below.

Furthermore, the results in Table 3 indicate that, as the total amount of acid-functional monomer is increased, the efficiency of the hydrolysis process to activate the thickener is improved, as evidenced by the time taken for the alkaline polymer dispersion to form a clear, viscous gel after addition of the 32% sodium hydroxide solution.

### Latex Examples 12 to 14 and Comparative Latex Example C15

Using the same procedure as for Latex Example 1, Latex Examples 12 to 14 and Comparative Latex Example C15 were prepared. The theoretical compositions of the copolymers and the properties of the latexes are set out in Table 6.

HPM-100 and HPM-400 are the active ingredients in the commercial products Sipomer® HPM-100, and Sipomer® HPM-400 available from Rhodia Novecare. These commercial products are known to be supplied as solutions of composition ∼50% active ingredient (associative monomer), ∼25% methacrylic acid and ∼25% water, but the chemical nature of the associative monomers in these products is held as a trade secret. They are, however, thought to be the methacrylate esters of the 20 to 22-mole ethoxylates of different C₁₁ to C₁₃ alcohols. See below.

Stearyl methacrylate is simply the methacrylate ester of a C₁₈ alcohol. It therefore contains no structural units derived from ethylene oxide.

**Table 6**

| LATEX EXAMPLE | 12 | 13 | 14 | C15 |
|---|---|---|---|---|
| Methyl acrylate (%) | 95·2 | 91·9 | 91·9 | 92·0 |
| Acrylic acid (%) | 1·0 | 4·3 | 4·3 | 5·5 |
| Methacrylic acid (%) | 1·2 | 1·3 | 1·3 | - |
| BEM active agent* (%) | 2·6 | - | - | - |
| | | | | |
| HPM-100 active agent* (%) | - | 2·5 | - | - |
| | | | | |
| HPM-400 active agent* (%) | - | - | 2·5 | - |
| Stearyl methacrylate(%) | - | - | - | 2·5 |

| PROPERTIES | | | | |
|---|---|---|---|---|
| Solids content (%) | 38·5 | 38·7 | 39·0 | 39·6 |
| pH | 3·82 | 3·57 | 2·67 | 2·82 |
| Particle size (nm) | 100 | 124 | 95 | 157 |
| Grit before filtration (%) | <0·01 | <0·01 | <0·01 | <0·01 |
| Viscosity | 20.0 | 14.0 | 18.0 | 14.0 |

| | | | | |
|---|---|---|---|---|
| * = the percentages shown are those of the associative monomer itself, i.e. the ethoxylate methacrylate species, not the percentage of the commercial product as supplied. | | | | |

Latex Examples 12 to 14 and Comparative Latex Example C15 were hydrolysed with aqueous sodium hydroxide and the thickening performance of the products assessed using the same procedures as those used to gather the data presented in Tables 3, 4 and 5. The observations recorded upon hydrolysis of Latex Examples 12 to 14 and C15 are presented in Table 7 below.

**Table 7**

| LATEX EXAMPLE | TIME TO REACH A VISCOUS STATE (MINS) | APPEARANCE AFTER 80 MINUTES IN ALKALINE SOLUTION | POURABILITY AFTER 80 MINUTES IN ALKALINE SOLUTION |
|---|---|---|---|
| 12 | Overnight | Mobile & clear | Yes |
| 13 | 32 | Viscous & clear | No |
| 14 | 24 | Viscous & clear | No |
| C15 | 45 | Viscous & clear | Just about |

The data showing the changes in viscosity on reduction of the pH of the hydrolysis product solutions derived from Comparative Latex Examples 15 are presented in Table 8 below. As before, viscosities are measured with a Brookfield RVT instrument and are given in centipoise.

**Table 8**

| COMPARATIVE LATEX EXAMPLE 15 | |
|---|---|
| Employs stearyl methacrylate | |
| pH | Viscosity |
| 10·12 | 1,800 |
| - | - |
| 7·04 | 1, 800 |
| 6·55 | 1,800 |
| - | - |
| 5·32 | 1, 800 |
| 4·9 | 0 |

The data showing the changes in viscosity on reduction of the pH of the hydrolysis product solutions derived from Latex Examples 12 to 14 are presented in Table 9 below. The associative monomers used in the preparation of the Example 13 and 14 latexes are the Sipomer® HPM series of monomers, whose chemical structures are not entirely clear. As before, viscosities are measured with a Brookfield RVT instrument and are given in centipoise.

**Table 9**

| LATEX EXAMPLE 12 | | LATEX EXAMPLE 13 | | LATEX EXAMPLE 14 | |
|---|---|---|---|---|---|
| Employs BEM | | Employs HPM-100 | | Employs HPM-400 | |
| pH | VISCOSITY | pH | VISCOSITY | pH | VISCOSITY |
| 9.96 | 131000 | - | - | 10·23 | 50,200 |
| 7.2 | 103000 | - | - | - | - |
| 7 | 98000 | 9·82 | 20,600 | - | - |
| 6.23 | 95000 | - | | 7·38 | 41,600 |
| 6 | 80000 | 6·97 | 19,000 | - | |
| 5.91 | 71000 | - | - | - | - |
| 5.6 | 55000 | 6·60 | 19,000 | 6·52 | 34,000 |
| 5.41 | 40000 | - | - | 6·21 | 28,000 |
| 5.3 | 32000 | 6·08 | 19,000 | 6·00 | 25,900 |
| 5.2 | 20000 | 5·96 | 15,400 | 5·92 | 24,400 |
| 5.11 | 9000 | 5·82 | 10,000 | - | - |
| 5.06 | 0 | - | - | 5·60 | 22,300 |
| | | 5·50 | 6,000 | 5·40 | 20,200 |
| | | 5·33 | ∼0 | 5·32 | 16, 000 |
| | | - | - | 5·10 | 13,000 |
| | | - | - | 5·00 | 6,000 |
| | | - | - | 4·90 | ∼0 |

The performance of Latex Example 12 illustrates that the main effect of reducing the acid content of the copolymer down to a lower level is to slow the rate of hydrolysis in aqueous NaOH, so this Example hydrolyses more slowly than does Latex Example 1, which in turn is slower than Latex Example 2, which in turn is slower than Latex Examples 3, 4 and 6; compare Tables 3 and 7. The hydrolysis product of Latex Example 12 is still pourable after 80 minutes, but is solid (like 1, 2, 3, 4 and 6) after standing overnight.

The results also confirm that the thickening effect of the Latex Example 12 is maintained down to approximately pH 5.1.

### Latex Example 16 and Comparative Latex Example C17

Latex Example 16 and Comparative Latex Example C17 were prepared using the same procedure as was used to prepare Latex Example 1. The theoretical compositions of these two copolymers and the properties of the latexes are shown in Table 10. Essentially, they replace the acrylic acid (a major part of component B, the ethylenically unsaturated carboxylic monomer) with the alternative ethylenically unsaturated acid monomers β-carboxyethyl acrylate or 2-acrylamido-2-methyl-1-propanesulphonic acid (AMPS). The latter is an ethylenically unsaturated sulphonic acid monomer, as distinct from an ethylenically unsaturated carboxylic acid monomer.

**Table 10**

| EXAMPLE | 16 | C17 |
|---|---|---|
| Methyl acrylate (%) | 91·9 | 91·9 |
| B-CEA (%) | 4·3 | - |
| AMPS (%) | - | 4 -3 |
| Methacrylic acid (%) | 1 -3 | 1·3 |
| BEM active agent* (%) | 2·5 | 2·5 |

| PROPERTIES | | |
|---|---|---|
| Solids content (%) | 39·1 | 39·0 |
| pH | 3·39 | 0·93 |
| Particle size (nm) | 78 | 302 |
| Grit before filtration (%) | <0·01 | <0·01 |

| | | |
|---|---|---|
| * = the percentages shown are those of the associative monomer itself, i.e. the ethoxylate methacrylate species, not the percentage of the commercial product as supplied. | | |

Latex Example 16 and Comparative Latex Example C17 were both subjected to the hydrolysis + pH reduction test procedure described previously i.e. that used to generate the data in Tables 3, 4 and 5. The results are set out in Tables 11 and 12 below.

**Table 11**

| LATEX EXAMPLE | TIME TO REACH A VISCOUS STATE (MINS) | APPEARANCE AFTER 80 MINUTES IN ALKALINE SOLUTION | POURABILITY AFTER 80 MINUTES IN ALKALINE SOLUTION |
|---|---|---|---|
| 16 | 35 | Viscous & clear | No |
| C17 | 28 | Viscous & clear | No |

**Table 12**

| LATEX EXAMPLE 16 | | COMPARATIVE LATEX EXAMPLE C17 | |
|---|---|---|---|
| Employs β-CEA | | Employs AMPS | |
| pH | Viscosity | pH | Viscosity |
| 10·69 | 81,400 | 11·20 | 11,000 |
| 5·50 | 45,000 | 5·90 | ∼0 |
| 5·00 | 31,000 | - | - |
| 4·80 | 3,500 | - | - |

The data show that the alternative ethylenically unsaturated carboxylic acid monomer β-carboxyethyl acrylate is effective in performing the invention. When an ethylenically unsaturated sulphonic acid monomer (AMPS) is used, however, although the hydrolysis step proceeds efficiently, the final viscosity reached at the end of this step is much lower than those obtained with ethylenically unsaturated carboxylic acid monomers, and the viscosity drops away to approximately zero at a higher pH on addition of citric acid.

### Latex Examples 18 to 20

Latex Examples 18, 19 and 20 were prepared using the same procedure as that used to prepare Latex Example 1, except that the Sipomer® BEM was replaced with the same amount of each of the alternative associative monomer solutions C1618-11MA, C1618-25MA and C1618-50MA. The theoretical compositions of these copolymers and the properties of the latexes are set out in Table 13.

**Table 13**

| LATEX EXAMPLE | 18 | 19 | 20 |
|---|---|---|---|
| Methyl acrylate (%) | 91·9 | 91·9 | 91·9 |
| Acrylic acid (%) | 4·3 | 4·3 | 4·3 |
| Methacrylic acid (%) | 1·3 | 1·3 | 1 -3 |
| C1618-11MA active agent* (%) | 2·5 | - | - |
| C1618-25MA active agent* (%) | - | 2·5 | - |
| C1618-50MA active agent* (%) | - | - | 2·5 |

| PROPERTIES | | | |
|---|---|---|---|
| Solids content (%) | 39·3 | 40·7 | 39·2 |
| pH | 3·0 | 2·9 | 3-1 |
| Particle size (nm) | 100 | 195 | 259 |
| Grit before filtration (%) | <0·01 | <0·01 | <0·01 |

| | | | |
|---|---|---|---|
| * = the percentages shown are those of the associative monomer itself, i.e. the ethoxylate methacrylate species, not the percentage of the solution in aqueous methacrylic acid as supplied. | | | |

These Latex Examples were all subjected to the hydrolysis + pH reduction test procedure described previously i.e. that used to generate the data in Tables 3, 4 and 5. The results are set out in Tables 14 and 15 below.

**Table 14**

| LATEX EXAMPLE | TIME TO REACH A VISCOUS STATE (MINS) | APPEARANCE AFTER 80 MINUTES IN ALKALINE SOLUTION | POURABILITY AFTER 80 MINUTES IN ALKALINE SOLUTION |
|---|---|---|---|
| 18 | 17 | Viscous & clear | No |
| 19 | 14 | Viscous & clear | No |
| 20 | 20 | Viscous & clear | No |

**Table 15**

| LATEX EXAMPLE 18 | | LATEX EXAMPLE 19 | | LATEX EXAMPLE 20 | |
|---|---|---|---|---|---|
| pH | VISCOSITY | pH | VISCOSITY | pH | VISCOSITY |
| 10·20 | 36,000 | 10·39 | 13,000 | 10·20 | 14,000 |
| 5·47 | 31,400 | 5·50 | 3, 000 | 5·45 | 3, 500 |
| 5·0 | 13,000 | 5·0 | ∼0 | 5·0 | ∼0 |
| 4·9 | 1,000 | - | - | - | - |

The data show the effectiveness of the invention when associative monomers derived from C₁₆-C₁₈ fatty alcohols are employed.

### Latex Example 21

Latex Example 21 was prepared with the same monomers in the same proportions as Latex Example 4, i.e. 88·6%wt methyl acrylate, 7·6%wt acrylic acid, 1·2%wt methacrylic acid and 2·6%wt BEM active agent. It was prepared by the same procedure as that described for Latex Example 1, except that the amount of ammonium persulphate used in the initiator solution was increased from 0·2g to 0·4g. This latex had a solids content of 39·3%, a pH of 2·96, a mean particle size of 255nm and a grit content below 0·01%wt.

When subjected to the usual hydrolysis with aqueous sodium hydroxide, this latex achieved a viscous state in 15 minutes. After 80 minutes it was viscous, clear and non-pourable. In this case, however, when performing the second, pH reduction, part of the test, citric acid was not used to bring the pH down to acidic levels. Instead, acetic acid was used in one instance and ascorbic acid used in another. The results of these tests are set out in Table 16. As usual, the viscosities are in centipoise.

**Table 16**

| LATEX EXAMPLE 21 | | LATEX EXAMPLE 21 | |
|---|---|---|---|
| pH reduced with acetic acid | | pH reduced with ascorbic acid | |
| pH | Viscosity | pH | Viscosity |
| 10·30 | 95,200 | 10·30 | 95,200 |
| 5·50 | 73,800 | 5·54 | 70,000 |
| 5·00 | 20,000 | 5·00 | 22,000 |
| 4·80 | 1,400 | 4·80 | 3,000 |

The data show that the invention may be effectively performed when acids other than citric are used to reduce the pH of the thickened medium down to acidic levels.

### Latex Example 22

Latex Example 22 was prepared using the procedure of Latex Example 1 and the raw material quantities of Latex Example 4 (88-6%wt methyl acrylate, 7-6%wt acrylic acid, 1-2%wt methacrylic acid and 2·6%wt BEM active agent) plus the addition of 0·25g of n-dodecyl mercaptan chain transfer agent into the monomer emulsion. The finished latex had a solids content of 38·0%, a pH of 2·60, a mean particle size of 79nm and a grit content below 0·01%wt.

When subjected to the usual hydrolysis with aqueous sodium hydroxide, this latex achieved a viscous state in 15 minutes. After 80 minutes it was viscous, clear and non-pourable. The behaviour of the hydrolysed gel on reduction of its pH with citric acid is documented in Table 17 below.

**Table 17**

| LATEX EXAMPLE 22 | |
|---|---|
| pH | Viscosity (cps) |
| 10·95 | 91,000 |
| 5·42 | 62,000 |
| 5·00 | 38,000 |
| 4·77 | 2,800 |

The data of Table 17 show that the invention remains effective when a low level of chain transfer agent is included within the emulsion polymerisation process.

The present results illustrate that compositions obtained by hydrolysis of latexes of the illustrative examples are suitable for use as pH responsive thickeners for aqueous systems effective under acidic conditions. In contrast, the comparative examples concern latexes containing copolymers which are not in accordance with the first aspect of the present invention. While some of these comparative latexes provide a thickening effect under alkaline conditions, this effect is not maintained under acidic conditions.

The present invention thus provides acrylic/methacrylic emulsion copolymers useful for thickening aqueous systems at acidic pH.

## Claims

1. An emulsion copolymer latex comprising an acrylic/methacrylic copolymer obtainable by the emulsion copolymerisation of the following monomer components:
A: from 75% weight to 97·5% by weight, based on the total weight of monomer components A + B + C + D, of methyl acrylate;
B: from 0-1% to 15% by weight, based on the total weight of monomer components A + B + C + D, of at least one ethylenically unsaturated carboxylic acid monomer containing one C=C double bond capable of free radical copolymerisation with component A and at least one carboxylic acid (CO₂H) group;
C: from 1% to 20% by weight based on the total weight of monomer components A + B + C + D of at least one associative monomer being a (meth)acrylate ester of an alkoxylated alcohol; and
D: from 0% to 15% by weight of one or more non-ionic ethylenically unsaturated monomers other than those defined above as A, B or C;
wherein the total monomer components A + B + C + D together add up to 100%.

2. An emulsion copolymer latex according to claim 1, wherein the amount of methyl acrylate (component A) is present in an amount selected from at least one of (i) 80% to 95% by weight, based on the total weight of monomer components A + B + C + D; and (ii) from 84% to 92% by weight, based on the total weight of monomer components A + B + C + D.

3. An emulsion copolymer latex according to claim 1 or 2, wherein the amount of ethylenically unsaturated carboxylic acid monomer (component B) is present in an amount selected from at least one of: (i) from 0-5% to 12% by weight, based on the total weight of monomer components A + B + C + D; and (ii) from 1·5% to 10% by weight, based on the total weight of monomer components A + B + C + D; and (iii) from 2% to 9-5% by weight, based on the total weight of monomer components A + B + C + D.

4. An emulsion copolymer latex according to any one of claims 1 to 3, wherein the ethylenically unsaturated carboxylic acid monomer (component B) is selected from acrylic acid, methacrylic acid, β-carboxyethyl acrylate, itaconic acid and mixtures thereof, and preferably is selected from acrylic acid, methacrylic acid, and mixtures thereof.

5. An emulsion copolymer latex according to any one of claims 1 to 4, wherein the at least one associative monomer (component C) is of general formula (I)
R-O- (CH₂-CH₂-O)x(CH₂-CH(R¹)O)y-C(O) -CR²=CH₂ (I)
wherein R¹ is methyl, R² is hydrogen or methyl, x is a positive integer with an average value from 3 to 80 and y is 0 or a positive integer with an average value from 1 to 20 and R is selected from at least one of (i) R is a linear or branched (C₇ to C₃₂) alkyl group, or an alkylphenyl group whose alkyl group has from 1 to 20 carbon atoms; (ii) R is a linear or branched (C₁₀ to C₂₅) alkyl group; and (iii) R is a linear or branched (C₁₂ to C₂₂) alkyl group.

6. An emulsion copolymer latex according to claim 5, wherein a component (c) is selected from a compound a general formula (I) in which (i) x is a positive integer with an average value from 10 to 60 and y is 0 or a positive integer with an average value from 1 to 20; and/or (ii) x is a positive integer with an average value from 20 to 30, and y is 0 or a positive integer with an average value from 1 to 20; and/or (iii) x is a positive integer with an average value from 20 to 25 and y is 0 or a positive integer with an average value from 1 to 20; and/or (iv) y is 0 or a positive integer with an average value from 1 to 5; and (v) y is 0.

7. An emulsion copolymer latex according to any one of claims 1 to 4, comprising at least one associative monomer C selected from the active ingredients in the commercial products Sipomer® BEM or Sipomer® HPM-400.

8. An emulsion copolymer latex according to any one of claims 1 to 7 in which the associative monomer C is present in an amount selected from at least one of: (i) from 1·5% to 15% by weight, based on the total weight of monomer components A + B + C + D; and (ii) from 2% to 11% by weight, based on the total weight of monomer components A + B + C + D.

9. An emulsion copolymer latex according to any one of claims 1 to 8, wherein the one or more non-ionic ethylenically unsaturated monomers D, other than those defined above as A, B or C, is present in an amount selected from at least one of: (i) from 0% to 10% by weight, based on the total weight of monomer components A + B + C + D; and (ii) from 0% to 5% by weight, based on the total weight of monomer components A + B + C + D.

10. An emulsion copolymer latex according to claim 9, wherein the one or more non-ionic ethylenically unsaturated monomers D are selected from linear, branched, cycloaliphatic or arylaliphatic esters of acrylic or methacrylic acids.

11. A method for making a thickener composition which comprises a step of hydrolysing an emulsion copolymer latex according to any one of claims 1 to 10, which method optionally includes a subsequent step of reducing the pH of the hydrolysis product with an acid in order to reduce the pH to 6 or less.

12. A composition suitable for use as a pH responsive thickener which comprises a hydrolysis product of an emulsion copolymer latex according to any one of claims 1 to 10 or the product of the method of claim 11.

13. A composition according to claim 12, wherein the pH of the composition is 6 or less.

14. The use of a composition obtainable by the hydrolysis of an emulsion copolymer latex according to any one of claims 1 to 10, as a thickener for an aqueous system, including use as a thickener for an aqueous system at acidic pH.

15. An acrylic/methacrylic copolymer obtainable by emulsion copolymerisation of the following monomer components:
A: from 75% weight to 97·5% by weight, based on the total weight of monomer components A + B + C + D, of methyl acrylate;
B: from 0-1% to 15% by weight, based on the total weight of monomer components A + B + C + D, of at least one ethylenically unsaturated carboxylic acid monomer containing one C=C double bond capable of free radical copolymerisation with component A and at least one carboxylic acid (CO₂H) group;
C: from 1% to 20% by weight based on the total weight of monomer components A + B + C + D of at least one associative monomer being a (meth)acrylate ester of an alkoxylated alcohol; and
D: from 0% to 15% by weight of one or more non-ionic ethylenically unsaturated monomers other than those defined above as A, B or C;
wherein the total monomer components A + B + C + D together add up to 100%.

## Patentansprüche

1. Emulsionscopolymer-Latex, der ein Acrylsäure/Methacrylsäure-Copolymer umfasst, das durch Emulsionscopolymerisation der folgenden Monomerkomponenten erhältlich ist:
A: 75 Gew.-% bis 97,5 Gew.-%, bezogen auf das Gesamtgewicht der Monomerkomponenten A + B + C + D, Methylacrylat;
B: 0,1 bis 15 Gew.-%, bezogen auf das Gesamtgewicht der Monomerkomponenten A + B + C + D, zumindest eines ethylenisch ungesättigten CarbonsäureMonomers, das eine C=C-Doppelbindung, die zur radikalischen Copolymerisation mit Komponente A in der Lage ist, und zumindest eine Carbonsäure- (CO₂H-) Gruppe enthält;
C: 1 bis 20 Gew.-%, bezogen auf das Gesamtgewicht der Monomerkomponenten A + B + C + D, zumindest eines assoziativen Monomers, bei dem es sich um einen (Meth)acrylatester eines alkoxylierten Alkohols handelt; und
D: 0 bis 15 Gew.-% eines oder mehrerer anderer nichtionischer, ethylenisch ungesättigter Monomere als die oben als A, B oder C definierten;
wobei alle Monomerkomponenten A + B + C + D zusammen 100 % ergeben.

2. Emulsionscopolymer-Latex nach Anspruch 1, worin die Menge an Methylacrylat (Komponente A) in einer Menge vorhanden ist, die ausgewählt ist aus zumindest einem von (i) 80 bis 95 Gew.-%, bezogen auf das Gesamtgewicht der Monomerkomponenten A + B + C + D; und (ii) 84 bis 92 Gew.-%, bezogen auf das Gesamtgewicht der Monomerkomponenten A + B + C + D.

3. Emulsionscopolymer-Latex nach Anspruch 1 oder 2, worin die Menge an ethylenisch ungesättigtem Carbonsäuremonomer (Komponente B) in einer Menge vorhanden ist, die ausgewählt ist aus zumindest einem von (i) 0,5 bis 12 Gew.-%, bezogen auf das Gesamtgewicht der Monomerkomponenten A + B + C + D; und (ii) 1,5 bis 10 Gew.-%, bezogen auf das Gesamtgewicht der Monomerkomponenten A + B + C + D; und (iii) 2 bis 9,5 Gew.-%, bezogen auf das Gesamtgewicht der Monomerkomponenten A + B + C + D.

4. Emulsionscopolymer-Latex nach einem der Ansprüche 1 bis 3, worin das ethylenisch ungesättigte Carbonsäuremonomer (Komponente B) aus Acrylsäure, Methacrylsäure, β-Carboxyethylacrylat, Itaconsäure und Gemischen davon ausgewählt ist und vorzugsweise aus Acrylsäure, Methacrylsäure und Gemischen daraus ausgewählt ist.

5. Emulsionscopolymer-Latex nach einem der Ansprüche 1 bis 4, worin das zumindest eine assoziative Monomer (Komponente C) der allgemeinen Formel (I) entspricht:
R-O-(CH₂-CH₂-O)ₓ(CH₂-CH(R¹)O)_{y}-C(O)-CR²=CH2 (I),
worin R¹ Methyl ist, R² Wasserstoff oder Methyl ist, x eine positive ganze Zahl mit einem Durchschnittswert von 3 bis 80 ist und y = 0 oder eine positive ganze Zahl mit einem Durchschnittswert von 1 bis 20 ist und R aus zumindest einem von Folgendem ausgewählt ist: (i) R ist eine unverzweigte oder verzweigte C₇₋₃₂-Alkylgruppe oder eine Alkylphenylgruppe, deren Alkylgruppe 1 bis 20 Kohlenstoffatome aufweist; (ii) R ist eine unverzweigte oder verzweigte C₁₀₋₂₅-Alkylgruppe, und (iii) R ist eine unverzweigte oder verzweigte C₁₂₋₂₂-Alkylgruppe.

6. Emulsionscopolymer-Latex nach Anspruch 5, worin eine Komponente (c) aus einer Verbindung der Formel (i) ausgewählt ist, worin (i) x eine positive ganze Zahl mit einem Durchschnittswert von 10 bis 60 ist und y = 0 oder eine positive ganze Zahl mit einem Durchschnittswert von 1 bis 20 ist; und/oder (ii) x eine positive ganze Zahl mit einem Durchschnittswert von 20 bis 30 ist und y = 0 oder eine positive ganze Zahl mit einem Durchschnittswert von 1 bis 20 ist; und/oder (iii) x oder eine positive ganze Zahl mit einem Durchschnittswert von 20 bis 25 ist und y = 0 oder eine positive ganze Zahl mit einem Durchschnittswert von 1 bis 20 ist; und/oder (iv) y = 0 oder eine positive ganze Zahl mit einem Durchschnittswert von 1 bis 5 ist; und (v) y = 0 ist.

7. Emulsionscopolymer-Latex nach einem der Ansprüche 1 bis 4, der zumindest ein assoziatives Monomer C umfasst, das aus der aus den aktiven Bestandteilen in den im Handel erhältlichen Produkten Sipomer^{®} BEM und Sipomer^{®} HPM-400 bestehenden Gruppe ausgewählt ist.

8. Emulsionscopolymer-Latex nach einem der Ansprüche 1 bis 7, worin das assoziative Monomer C in einer Menge vorhanden ist, die ausgewählt ist aus zumindest einem von Folgendem: (i) 1,5 bis 15 Gew.-%, bezogen auf das Gesamtgewicht der Monomerkomponenten A + B + C + D; und (ii) 2 bis 11 Gew.-%, bezogen auf das Gesamtgewicht der Monomerkomponenten A + B + C + D.

9. Emulsionscopolymer-Latex nach einem der Ansprüche 1 bis 8, worin das eine oder die mehreren anderen nichtionischen, ethylenisch ungesättigten Monomere D außer den oben als A, B oder C definierten in einer Menge vorhanden sind, die ausgewählt ist aus zumindest einem von Folgendem: (i) 0 bis 10 Gew.-%, bezogen auf das Gesamtgewicht der Monomerkomponenten A + B + C + D; und (ii) 0 bis 5 Gew.-%, bezogen auf das Gesamtgewicht der Monomerkomponenten A + B + C + D.

10. Emulsionscopolymer-Latex nach Anspruch 9, worin das eine oder die mehreren nichtionischen, ethylenisch ungesättigten Monomere D aus unverzweigten, verzweigten, cycloaliphatischen oder arylaliphatischen Estern von Acryl- oder Methacrylsäure ausgewählt sind.

11. Verfahren zur Herstellung einer Verdickungsmittelzusammensetzung, das einen Schritt des Hydrolysierens eines Emulsionscopolymer-Latex nach einem der Ansprüche 1 bis 10 umfasst, wobei das Verfahren gegebenenfalls einen nachfolgenden Schritt des Senkens des pH des Hydrolyseprodukts mit einer Säure umfasst, um den pH auf 6 oder weniger zu senken.

12. Zusammensetzung, die zur Verwendung als pH-reaktives Verdickungsmittel geeignet ist, die ein Hydrolyseprodukt eines Emulsionscopolymer-Latex nach einem der Ansprüche 1 bis 10 oder das Produkt eines Verfahrens nach Anspruch 11 umfasst.

13. Zusammensetzung nach Anspruch 12, worin der pH der Zusammensetzung 6 oder weniger beträgt.

14. Verwendung einer durch Hydrolyse eines Emulsionscopolymer-Latex nach einem der Ansprüche 1 bis 10 erhältlichen Zusammensetzung als Verdickungsmittel für ein wässriges System, die die Verwendung als Verdickungsmittel für ein wässriges System mit saurem pH umfasst.

15. Acrylsäure/Methacrylsäure-Copolymer, das durch Emulsionscopolymerisation der folgenden Komponenten erhältlich ist:
A: 75 Gew.-% bis 97,5 Gew.-%, bezogen auf das Gesamtgewicht der Monomerkomponenten A + B + C + D, Methylacrylat,;
B: 0,1 bis 15 Gew.-%, bezogen auf das Gesamtgewicht der Monomerkomponenten A + B + C + D, zumindest eines ethylenisch ungesättigten Carbonsäuremonomers, das eine C=C-Doppelbindung, die zur radikalischen Copolymerisation mit Komponente A in der Lage ist, und zumindest eine Carbonsäure(CO₂H-) Gruppe enthält;
C: 1 bis 20 Gew.-%, bezogen auf das Gesamtgewicht der Monomerkomponenten A + B + C + D, zumindest eines assoziativen Monomers, bei dem es sich um einen (Meth)acrylatester eines alkoxylierten Alkohols handelt; und
D: 0 bis 15 Gew.-% eines oder mehrerer anderer nichtionischer, ethylenisch ungesättigter Monomere außer den oben als A, B oder C definierten;
worin alle Monomerkomponenten A + B + C + D zusammen 100 % ergeben.

## Revendications

1. Latex de copolymère en émulsion comprenant un copolymère acrylique/méthacrylique pouvant être obtenu par copolymérisation en émulsion des composants monomères suivants :
A : de 75 % en poids à 97,5 % en poids, par rapport au poids total des composants monomères A + B + C + D, d'acrylate de méthyle ;
B : de 0,1 % à 15 % en poids, par rapport au poids total des composants monomères A + B + C + D, d'au moins un monomère d'acide carboxylique à insaturation éthylénique contenant une seule double liaison C=C capable d'une copolymérisation radicalaire avec le composant A et au moins un groupe acide carboxylique (CO₂H) ;
C : de 1 % à 20 % en poids, par rapport au poids total des composants monomères A + B + C + D, d'au moins un monomère associatif qui est un ester (méth)acrylate d'un alcool alcoxylé ; et
D : de 0 % à 15 % en poids d'un ou plusieurs monomères non-ioniques à insaturation éthylénique autres que ceux définis ci-dessus pour A, B ou C ;
dans lequel le total des composants monomères A + B + C + D pris ensemble totalise 100 %.

2. Latex de copolymère en émulsion selon la revendication 1, dans lequel l'acrylate de méthyle (composant A) est présent en une quantité qui est au moins l'une choisie parmi (i) 80 % à 95 % en poids, par rapport au poids total des composants monomères A + B + C + D ; et (ii) 84 % à 92 % en poids, par rapport au poids total des composants monomères A + B + C + D.

3. Latex de copolymère en émulsion selon la revendication 1 ou 2, dans laquelle le monomère d'acide carboxylique à insaturation éthylénique (composant B) est présent en une quantité qui est au moins l'une choisie parmi : (i) 0,5 % à 12 % en poids, par rapport au poids total des composants monomères A + B + C + D ; et (ii) 1,5 % à 10 % en poids, par rapport au poids total des composants monomères A + B + C + D ; et (iii) 2 % à 9,5 % en poids, par rapport au poids total des composants monomères A + B + C + D.

4. Latex de copolymère en émulsion selon l'une quelconque des revendications 1 à 3, dans lequel le monomère d'acide carboxylique à insaturation éthylénique (composant B) est choisi parmi l'acide acrylique, l'acide méthacrylique, l'acrylate de β-carboxyéthyle, l'acide itaconique et leurs mélanges, et de préférence est choisi parmi l'acide acrylique, l'acide méthacrylique, et leurs mélanges.

5. Latex de copolymère en émulsion selon l'une quelconque des revendications 1 à 4, dans lequel l'au moins un monomère associatif (composant C) est de formule générale (I)
R-O-(CH₂-CH₂-O)ₓ(CH₂-CH(R¹)O)_{y}-C(O) -CR²=CH₂ (I)
dans laquelle R¹ est méthyle, R² est l'hydrogène ou méthyle, x est un entier positif ayant une valeur moyenne de 3 à 80 et y vaut 0 ou est un entier positif ayant une valeur moyenne de 1 à 20 et R est au moins l'un choisi parmi (i) un groupe alkyle en C₇ à C₃₂ linéaire ou ramifié ou un groupe alkylphényle dont le groupe alkyle a de 1 à 20 atomes de carbone ; (ii) un groupe alkyle en C₁₀ à C₂₅ linéaire ou ramifié ; et (iii) un groupe alkyle en C₁₂ à C₂₂ linéaire ou ramifié.

6. Latex de copolymère en émulsion selon la revendication 5, dans lequel un composant (c) est choisi parmi un composé de formule générale (I) dans lequel (i) x est un entier positif ayant une valeur moyenne de 10 à 60 et y vaut 0 ou est un entier positif ayant une valeur moyenne de 1 à 20 ; et/ou (ii) x est un entier positif ayant une valeur moyenne de 20 à 30, et y vaut 0 ou est un entier positif ayant une valeur moyenne de 1 à 20 ; et/ou (iii) x est un entier positif ayant une valeur moyenne de 20 à 25 et y vaut 0 ou est un entier positif ayant une valeur moyenne de 1 à 20 ; et/ou (iv) y vaut 0 ou est un entier positif ayant une valeur moyenne de 1 à 5 ; et (v) y vaut 0.

7. Latex de copolymère en émulsion selon l'une quelconque des revendications 1 à 4, comprenant au moins un monomère associatif C choisi parmi les agents actifs des produits du commerce Sipomer® BEM et Sipomer® HPM-400.

8. Latex de copolymère en émulsion selon l'une quelconque des revendications 1 à 7, dans lequel le monomère associatif C est présent en une quantité qui est au moins l'une choisie parmi (i) 1,5 % à 15 % en poids, par rapport au poids total des composants monomères A + B + C + D ; et (ii) 2 % à 11 % en poids, par rapport au poids total des composants monomères A + B + C + D.

9. Latex de copolymère en émulsion selon l'une quelconque des revendications 1 à 8, dans lequel le ou les monomères non-ioniques à insaturation éthylénique D, autres que ceux définis ci-dessus pour A, B et C, est présent en une quantité qui est au moins l'une choisie parmi : (i) 0 % à 10 % en poids, par rapport au poids total des composants monomères A + B + C + D ; et (ii) 0 % à 5 % en poids, par rapport au poids total des composants monomères A + B + C + D.

10. Latex de copolymère en émulsion selon la revendication 9, dans lequel le ou les monomères non-ioniques à insaturation éthylénique D sont choisis parmi les esters linéaires, ramifiés, cycloaliphatiques ou arylaliphatiques d'acides acryliques ou méthacryliques.

11. Procédé pour préparer une composition d'épaississant, qui comprend une étape d'hydrolyse d'un latex de copolymère en émulsion selon l'une quelconque des revendications 1 à 10, lequel procédé comprend éventuellement une étape subséquente de réduction du pH du produit d'hydrolyse avec un acide afin que le pH soit réduit à 6 ou moins.

12. Composition utilisable en tant qu'épaississant sensible au pH qui comprend un produit d'hydrolyse d'un latex de copolymère en émulsion selon l'une quelconque des revendications 1 à 10 ou le produit du procédé de la revendication 11.

13. Composition selon la revendication 12, dans laquelle le pH de la composition est de 6 ou moins.

14. Utilisation d'une composition pouvant être obtenue par l'hydrolyse d'un latex de copolymère en émulsion selon l'une quelconque des revendications 1 à 10 en tant qu'épaississant pour un système aqueux, comprenant une utilisation en tant qu'épaississant pour un système aqueux à un pH acide.

15. Copolymère acrylique/méthacrylique pouvant être obtenu par polymérisation en émulsion des composants monomères suivants :
A : de 75 % en poids à 97,5 % en poids, par rapport au poids total des composants monomères A + B + C + D,
d'acrylate de méthyle ;
B : de 0,1 % à 15 % en poids, par rapport au poids total des composants monomères A + B + C + D, d'au moins un monomère d'acide carboxylique à insaturation éthylénique contenant une seule double liaison C=C capable d'une copolymérisation radicalaire avec le composant A et au moins un groupe acide carboxylique (CO₂H) ;
C : de 1 % à 20 % en poids, par rapport au poids total des composants monomères A + B + C + D, d'au moins un monomère associatif qui est un ester (méth)acrylate d'un alcool alcoxylé ; et
D : de 0 % à 15 % en poids d'un ou plusieurs monomères non-ioniques à insaturation éthylénique autres que ceux définis ci-dessus pour A, B ou C ;
dans lequel le total des composants monomères A + B + C + D pris ensemble totalise 100 %.
